# EUROPEAN PATENT SPECIFICATION

(11) **EP 2 870 211 B1**
(45) Date of publication and mention of the grant of the patent: **18.05.2016**
(21) Application number: 13734101.2
(22) Date of filing: 05.07.2013
(51) Int. Cl.: C09D 201/00, B05D 3/06, C09D 133/06, C09D 4/06

(54) **PIPES FOR PIPELINES HAVING INTERNAL COATING AND METHOD FOR APPLYING THE COATING**
LEITUNGSROHRE MIT INNENBESCHICHTUNG UND VERFAHREN ZUM AUFBRINGEN DER BESCHICHTUNG
TUYAUX DE CANALISATION AVEC REVÊTEMENT INTERNE ET PROCÉDÉ POUR APPLIQUER LEDIT REVÊTEMENT

(30) Priority: 06.07.2012 EP 12175250
(43) Date of publication of application: 13.05.2015
(73) Proprietor: Onderzoekscentrum voor Aanwending van Staal N.V., 9060 Zelzate (BE)
(72) Inventor: LEGROS, Philippe, B-9060 Zelzate (BE); STONE, Vincent, William, Marcel, B-9060 Zelzate (BE); DIAZ GONZALES, Eva, B-9060 Zelzate (BE)
(74) Representative: EP&C
(86) International application number: PCT/EP2013/064247
(87) International publication number: WO 2014/006181

(56) References cited:
- WO-A1-2010/140703
- DATABASE WPI Week 201154 Thomson Scientific, London, GB; AN 2011-H90589 XP002710327, & CN 102 079 937 A (SHANGHAI HILONG SHINE NEW MATERIAL CO) 1 June 2011 (2011-06-01)

## Description

### Field of the invention

The present invention is related to a pipe for pipelines for transporting fluids such as natural gas, oil or water over long distances, and to a coating applied to the interior surface of such pipes. The invention is related to a pipe provided with a coating cured by ultra-violet (UV) irradiation, and to a method for applying and curing such a coating.

### State of the art

The skin friction between a fluid flowing through a pipe and its inside wall, will provide a major contribution to the pressure drop arising along the pipeline. This pressure drop is the main obstacle to the transportation of oil and gas fluids by pipelines over long distances, as in the case of gas transportation pipelines, where the distance between a compressor and a distribution centre or a storage facility can reach more than a thousand kilometres.

70-100 µm thick one coat systems are typically factory-applied internally in steel pipes for transportation pipelines carrying non corrosive fluids (e.g. dry natural gas), in order to reduce the pressure drop by making the inner wall smoother. Wall friction reduction will lead to several major economic benefits such as an increase of the pipeline capacity at a given pressure, or, at a given pipeline capacity, a smaller pipe diameter, reduced fuel costs and a reduced number of compression stations. An internal coating with a smooth finish will also give in these applications an extra desired corrosion resistance during the transportation or field storage of the coated pipeline and during pipeline servicing. It will make the internal surface easier to clean and inspect. Pipeline girth welds made during pipeline construction may also be internally coated on site in some cases. This operation will have little impact on the overall hydraulic efficiency but will prevent internal corrosion that may otherwise be initiated from non-coated internal areas. Thicker one- or two-coat systems are applied in pipelines carrying corrosive fluids (e.g. wet natural gas) as requirements on corrosion resistance and resistance to chemicals are higher. At present, the coating chemistries that are used as internal coatings in pipelines are mostly epoxy and/or phenolic-based : two-component solvent-based liquid epoxy coatings, two-component solvent-free liquid epoxy coatings, fusion-bonded epoxy (FBE) coatings, epoxy novolac coatings, epoxy phenolic coatings, and phenolic coatings.

The existing solvent-based liquid epoxy coating technologies suffer from several performance and process related drawbacks. Whereas it is known that the highest pressure drop reductions can be achieved at the lowest roughnesses, the known coating techniques result in internal surfaces having a typical mean roughness depth (Rz) of more than 5 µm. Further, the liquid epoxy coatings are two component systems spray applied and cured at reduced temperatures in order to achieve an acceptable surface quality. Hours to days are needed for reaching the final cured coatings. Using liquid epoxy coatings makes it uneconomical to check the final performances of internally coated girth welds, especially when the internal coating needs to be applied on offshore lay barges. The solvent-based system requires costly measures to reduce the emission of such solvents.

Since the fluids need to be transported from/to increasingly remote regions, the coated pipes are more and more shipped to remote locations and stored in aggressive environments for long periods. The internal walls of the pipes are therefore subjected to internal corrosion during transport and storage. Moreover, the acidic contaminants in the fluids to be transported pose internal corrosion challenges during service as well.

Poor resistance to methanol is also often cited as a major drawback for the solvent-based epoxy coatings. Coating performances may be impacted when the pipeline is dried before putting the pipeline into service. In addition, the coating may be abraded by solid contaminants or particles e.g. generated from corroded areas. Corrosion via chemicals impact and abrasion via solids increase the surface roughness increases, thereby reducing the hydraulic efficiency and adding to the pressure drop.

Therefore there is a need for a coating technique based on a solvent-free composition that rapidly cures and provides a better overall balance between surface smoothness, corrosion resistance, resistance to chemicals such as methanol and abrasion resistance.

Two-component solvent-free liquid epoxy coatings can solve some technical issues: they do not contain solvents and some result in a smooth coating (Rz < 5µm). However, the curing and the pot life of these compositions remain problematic. Therefore there remains the need for a one-component coating composition that can be rapidly cured and provides the above mentioned balance between surface smoothness and resistance to chemicals, such as methanol, corrosion resistance and abrasion resistance.

WO 2010/140703 discloses a threaded joint in steel pipes for the oil industry, wherein the (outer) surface of a pin and/or the (inner) surface of a box for a threaded joint are coated with a photocurable composition and the composition is cured by irradiation. The object of the joint thus treated is to ensure a gastight connection between the pin and the box. This is done to circumvent the use of compound greases. Evidently the cured photocurable composition does not cover the internal wall of the steel pipe, thereby not providing a smooth and resistant surface.

WO96/06299 discloses a process for coating the inner surface of a hollow body. The process can be used in particular for coating gas and water pipes, especially waste water pipelines and sewers. The coating is meant to repair damages to the pipes by filling cracks and prevent the occurrence of new cracks. The pipes are usually made of concrete or ceramics, or similar material. It should provide a gastight pipe and also a pipe that is resistant to corrosive compounds in waste water. The process comprises the introduction of a coating probe into the hollow body, the application of a curable material on the inner surface; and curing of the material. The coating may be epoxy and urethane coatings. However, it may also be oligomeric derivatives of acrylic and methacrylic acid, that may be cured and crosslinked by means of UV radiation or electron beam. The thickness of any of the coatings is from 0.1 to 50 mm, preferably 1 to 25 mm. This application is not related to the smoothness of the pipes. Moreover, the problem of abrasion does not occur in these pipes since the sewer fluids tend to flow slowly.

CN102079937 (XP002710327) relates to an ultraviolet curing anti-drag paint in steel pipes. Epoxy acrylate and polyester acrylate are used combined as prepolymers, and phosphate-modified acrylate resin is used as an adhesion promoter. It does not disclose the use of iron oxide red pigment.

### Summary of the invention

It has now surprisingly been found that UV-curable coatings in pipes for a pipeline provide an excellently smooth and flexible surface that further shows good abrasion resistance, corrosion resistance and resistance to chemicals, such as methanol, if the coatings comprise one or more adhesion promoters.

The present invention provides an alternative for the current coating systems that does not suffer from at least some of the disadvantages described above. It has surprisingly been found that the presence of an adhesion promoter in the coating provide pipes with flexibility, in addition to other advantages. To that effect, the invention is related to products and methods as disclosed in the appended claims. Besides providing a method that can be applied industrially for the coating of complete pipes prior to their installation in a pipellne system, the invention provides also a portable technology for coating the interior surface of pipes after the pipeline installation, given that the curing requires a very short period, i.e. a matter of seconds. Further it does not require heating the pipe, the composition can be solvent-free and can therefore easily be applied on-site. Depending on the components used and the thickness of the applied coating, the invention provides coating solutions for the transport of a plurality of fluids: corrosion resistant coatings for the transport of chemically aggressive fluids, coatings providing minimal flow resistance for the transport of non-corrosive fluids.

The invention is equally related to a UV-curable liquid coating material having a composition comprising or consisting of the following components or consisting of the following components and a remainder being water or one or more other solvents :
* one or more oligomers, being photocurable (meth)acrylate resins,
* one or more (meth)acrylate monomers,
* one or more adhesion promoters,
* one or more photopolymerization initiators, and
* iron oxide red pigment.

According to an embodiment of said coating material:
* said one or more oligomers are functionalized oligomers, preferably selected from the group consisting of epoxy acrylates, urethane acrylates and polyester acrylates;
* said one or more monomers are selected from the group consisting of a monofunctional (meth)acrylate monomer and a difunctional (meth)acrylate monomer;
* said one or more adhesion promoters are selected from the group consisting of organosilanes, thiol-based compounds, organotitanates, organozirconates, zircoaluminates and (meth)acrylates, said (meth)acrylates having a phosphate group.

Said composition may further comprise :
* abrasion-resistant particles,
* one or more corrosion inhibitors,
* one or more extenders,
* more colour pigments,
* one or more wettability and/or levelling agents.

According to an embodiment, said one or more oligomers comprise a polyester acrylate resin, an epoxy acrylate resin or a urethane acrylate resin having hardness and/or abrasion-enhancing properties.

According to an embodiment, said one or more oligomers comprises at least 35 mass% of a hardness and/or abrasion-enhancing urethane acrylate resin or at least 35 mass% of a hardness and/or abrasion-enhancing polyester acrylate resin.

According to an embodiment, said coating material composition comprises at least 20 mass%, preferably at least 25 mass% of a dispersion of colloidal particles in (meth)acrylate monomer. Suitably, the coating composition comprises at least 10 mass% of colloidal particles dispersed in (meth)acrylate monomer. In the specification by (meth)acrylate is understood acrylate and/or methacrylate. In particular, the present invention is defined by the present claims.

### Brief description of the figures

Figure 1 is a 3D-view of a UV curing installation suitable for applying the method of the invention.
Figure 2 shows a front and side view of the installation of figure 1.
Figure 3 shows a detail of the installation of figures 1 and 2.

### Detailed description of the invention

The invention is related to the following :
* a pipe for a pipeline installation, provided with a UV cured coating,
* a method for applying a layer of a liquid UV curable coating material on the inner surface of a pipe for a pipeline installation, and for curing the coating material, thereby forming a UV cured coating,
* a liquid UV-curable coating material of a given composition, suitable for use on the interior surface of a pipe for pipelines.

The pipe is suitable for pipelines. That implies that the pipe is generally made of a metal, preferably steel. Hence, the pipe is preferably a steel pipe. By steel is understood an alloy comprising iron and carbon. In low-alloy steel a variety of further elements may be present in amount of 1 to 8%wt, based on the total steel composition. Such elements include manganese and silicon. Further alloy components include boron, vanadium, nickel, chromium, molybdenum. Less common are aluminium, cobalt, copper, cerium, niobium, titanium, tungsten, tin, zinc, lead, and zirconium. High-alloy steel contains more than 8 %wt of further elements. The main example of high-alloy steel is stainless steel, comprising major amounts of chromium and nickel. The present invention is particularly suited for low-alloy steel.

According to the method of the invention, a pipe that is suitable for use in a pipeline system is provided with a layer of a liquid UV-curable coating material on its inner surface, preferably by spraying the coating material onto the surface. According to a preferred embodiment, said material has a composition comprising the following components, wherein the invention is also related to a coating composition comprising said components:
* One or more oligomers, being photocurable (meth)acrylate resins. These oligomers are preferably functionalized oligomers. Such functionalized oligomers may be selected from the group consisting of epoxy acrylates, urethane acrylates and polyester acrylates. This can be oligomers that enhance the adhesion of the coating and protect against corrosion (hereafter called 'adhesion/corrosion oligomer'). The latter type of oligomer may be an epoxy acrylate oligomer, such as the commercial product Ebecryl® 3300 from Allnex, or CN® UVE 151MM70 from Sartomer. Possibly in combination with an adhesion/corrosion oligomer, an oligomer may be applied that enhances the hardness and/or the abrasion resistance of the coating (hereafter called 'hardness/abrasion oligomer'). The latter can be a polyester acrylate oligomer such as CN® 2609 from Sartomer, or it can be a urethane acrylate oligomer, such as CN® 9761A75 from Sartomer.
* One or more (meth)acrylate monomers, preferably selected from the group consisting of a monofunctional (meth)acrylate monomer and a difunctional (meth)acrylate monomer. Monomers can be used that have a diluting effect (e.g. DPGDA - dipropylene glycol diacrylate or TPGDA - tripropylene glycol diacrylate), an adhesion enhancing and corrosion protecting effect (e.g. cyclic trimethylolpropane formal acrylate (hereinafter CTFA), such as the commercial product Sr®531 from Sartomer), or a hardness enhancing and/or corrosion protective effect such as tricyclodecane dimethanol diacrylate (hereinafter DCPDA) (e.g. Sr® 833S from Sartomer), or an adhesion and/or flexibility enhancing effect (e.g. ethoxylated phenol acrylate, such as the commercial product Ebecryl® 110 from Allnex),
* One or more UV-curable or UV-compatible adhesion promoters. Adhesion promoters useful herein are known alkenyl functional silanes, having an unsaturated organic moiety bonded to the silicone atom, for example an unsaturated acrylic, vinyl, allyl, methallyl, propenyl, hexenyl, ethynyl, butadienyl, hexadienyl, cyclopentenyl, cyclopentadienyl, cyclohexenyl, vinylcyclohexylethyl, divinylcyclohexylethyl, norbornenyl, vinylphenyl or styryl groups. Other alkenyl functional organometallics include titanates, such as vinylalkyl titanates, zirconates, zinc diacrylate, and zinc dimethacrylates. Preferred are phosphorus-containing compounds with mono-esters of phosphinic, mono- and diesters of phosphonic and phosphoric acids having one unit of acrylic unsaturation present being especially preferred. Adhesion promoters preferably contain two different polymer-reactive groups, such as unsaturated and silane groups, unsaturated and hydroxyl groups, unsaturated and acidic groups, and unsaturated and isocyanate groups. Acrylic unsaturation is preferred.

Representative of the reactive phosphorus-containing adhesion promoters are, phosphoric acid; 2-methacryloyloxyethyl phosphate; bis-(2-methacryloxyloxyethyl)phosphate; 2-acryloyloxyethyl phosphate; bis-(2-acryloyloxyethyl)phosphate; methyl-(2-methacryloyloxyethyl)phosphate; ethyl methacryloyloxyethyl phosphate; methyl acryloyloxyethyl phosphate; ethyl acryloyloxyethyl phosphate; propyl acryloyloxyethyl phosphate, isobutyl acryloyloxyethyl phosphate, ethylhexyl acryloyloxyethyl phosphate, halopropyl acryloyloxyethyl phosphate, haloisobutyl acryloyloxyethyl phosphate or haloethylhexyl acryloyloxyethyl phosphate; vinyl phosphonic acid; cyclohexene-3-phosphonic acid; [alpha]-hydroxybutene-2 phosphonic acid; 1-hydroxy-1-phenylmethane-1,1-diphosphonic acid; 1-hydroxy-1-methyl-1-disphosphonic acid: 1-amino-1 phenyl-1,1-diphosphonic acid; 3-amino-1-hydroxypropane-1,1-disphosphonic acid; amino-tris(methylenephosphonic acid); gamma-amino-propylphosphonic acid; gamma-glycidoxypropylphosphonic acid; phosphoric acid-mono-2-aminoethyl ester; allyl phosphonic acid; allyl phosphinic acid; [beta]-methacryloyloxyethyl phosphinic acid; diallylphosphinic acid; and allyl methacryloyloxyethyl phosphinic acid. A preferred adhesion promoter is 2-hydroxyethylmethacrylate phosphate.

This can for example be hydroxyethyl methacrylate phosphate, such as Ebecryl® 168 from Allnex. Another example is the trifunctional acid ester, comprising acrylate units on a phosphate group, marketed as Sr® 9051 by Sartomer.
* One or more photopolymerization initiators. A suitable photopolymerization initiator includes alpha hydroxyl ketone, such as 2-hydroxy-2-methyl-1-phenyl propanone (HDMAP, a commercial product Darocur® 1173 from BASF or Additol® HDMAP from Allnex), acyl phosphine oxide, such as 2,4,6-trimethylbenzoyl diphenyl phosphine oxide (commercial product Additol® TPO from Allnex), benzophenone and derivatives thereof, ketosulphones, such as 1-[4-[(4-benzoylphenyl)thio]phenyl]-2-methyl-2-[(4-methylphenyl)sulfonyl]-1-propanone (commercial product Esacure® 1001 M from Lamberti). The type of photopolymerization initiator may depend on some of the other components or on components added in addition to said components. For example, the type of photopolymerization initiator may depend on the presence of pigments that could absorb the same wavelength than a particular photopolymerization initiator: in that case another photopolymerization initiator absorbing in another wavelength range of UV spectrum has to be introduced.

The coating material composition as described above may comprise :
* between 10 and 60 mass% of said one or more photocurable (meth)acrylate resins,
* between 5 and 70 mass% of said one or more (meth)acrylate monomers,
* between 1 and 10 mass% of said one or more adhesion promoters, and
* between 1 and 10 mass% of said one or more photopolymerization initiators.

According to a preferred embodiment, the use of at least 35 mass% of a hardness/ abrasion oligomer of the urethane type or at least 35 mass% of a hardness /abrasion oligomer of the polyester type leads to superior abrasion and hardness characteristics of the cured coating. An example of a hardness/abrasion polyester resin is CN® 2634. An example of a hardness/abrasion urethane resin is CN® 9761A75.

According to an embodiment of the method and the coating material of the invention, the coating material composition consists of the above-described components, or it consists of said components and a remainder being water or and/or one or more other solvents.

According to an embodiment, besides the above components, additional components may be added to the coating material composition, in particular one or more of the following:
* At least one dispersion of colloidal particles in a (meth)acrylate monomer. This may be a dispersion of silica particles in a (meth)acrylate monomer, such as a dispersion of SiO₂ particles (e.g. 50 mass%) in CTFA (available as Nanocryl® C130 from Evonik), or a dispersion of SiO₂ particles (e.g. from 35 to 65%wt) in alkoxylated pentaerythritol tetraacrylate (available as Nanocryl® C165 from Evonik) or alkylated neopentylglycol diacrylate. The moieties in the alkoxylation are suitably ethoxy or propoxy and the number of alkoxygroups may suitably range from 1 to 15;
* One or more corrosion inhibitors preferably selected from phosphate anticorrosive pigments, calcium ion-exchanged silica, metal salts of organic nitro compounds and combinations thereof. Examples of commercial corrosion inhibitors include calcium aluminium polyphosphate silicate hydrate, strontium aluminium polyphosphate hydrate (e.g. Novinox® PAS from SNCZ), organic modified zinc aluminium molybdenum orthophosphate hydrate, zinc aluminium polyphosphate hydrate, zinc calcium strontium aluminium orthophosphate silicate hydrate, basic zinc molybdenum orthophosphate hydrate, zinc aluminium orthophosphate hydrate, organic modified basic zinc orthophosphate hydrate, zinc salt of phthalic acid, calcium modified silica gel, modified zinc phosphate, magnesium aluminium polyphosphate hydrate, strontium aluminium polyphosphate hydrate, alkaline earth phosphate, zinc aluminium polyphosphate hydrate, zinc calcium strontium phosphosilicate), organically modified basic zinc orthophosphate, silica based anticorrosive pigment, zinc phosphate-molybdate, iron zinc phosphates hydrate, hydrated zinc and aluminium orthophosphate, basic zinc orthophosphate tetrahydrate, strontium chromate, zinc chromate, zinc potassium chromate, zinc tetraoxychromate.

This corrosion inhibitor can be zinc calcium strontium aluminium orthophosphate silicate hydrate, e.g. wherein Zn is present in an amount of 30- 40%wt as ZnO, Ca in an amount of 10 to 20 %wt as CaO, Sr in an amount of 2 to 10 %wt as SrO and phosphorus in an amount of 15 - 20%wt as P₂O₅ and Si in an amount of 10 to 20 %wt as SiO₂.(available e.g. as the commercial product Heucophos®ZCP from Heubach), or an organic modified zinc aluminium molybdenum orthophosphate hydrate, comprising Zn in an amount of 50 - 65%wt as ZnO, Al in an amount of 0.5 to 5 %wt as Al₂O₃, Mo in an amount of 0.1 to 1.5%wt as MoO₃, and phosphorus in an amount of 20 to 30 %wt as P₂O₅, (available as Heucophos® ZAM from Heubach), all percentages based on the total weight of the dried water-free composition, or zinc-5-nitroisophthalate (e.g. Heucorin® RZ from Heubach).
* One or more extenders, e.g. a microcrystalline talc, i.e. talc with a particle size of smaller than 30 µm, preferably, having an average particle size of 1 to 10 µm. A commercial example is Mistron® Monomix G from Imerys Talc,
* iron oxide (red), such as Bayferrox® 130M from Lanxess, or iron oxide and more colour pigments,
* One or more wettability enhancing and/or levelling agents (the latter improving the smoothness of the coating); a suitable levelling agent is a solution of a polyester modified acrylic functional poly-dimethyl-siloxane in propoxylated 2-neopentyl glycol diacrylate. This product exhibits controlled improvement of surface slip and allows easy surface slip adjustment. It improves levelling, substrate wetting and orientation of flatting agents. It has acrylic functionality and is preferably free from other solvents. A commercial example thereof is BYK® UV-3570 from BYK.

A preferred embodiment of the coating material composition includes at least 20 mass%, preferably at least 25 mass% of a dispersion of colloidal particles (preferably silica particles) in (meth)acrylate monomer, which leads to superior hardness and abrasion resistance.

The method of the invention comprises the steps of :
* applying a layer of a liquid UV-curable coating material, preferably a layer of any of the above-described liquid coating material compositions onto the interior surface of a pipe,
* curing said layer by irradiating said layer with UV light.

The thickness of the layer after curing is preferably between 20 µm and 120 µm, more preferably between 25 µm and 80 µm or, even more preferably between 30 µm and 60 µm. It was found that the method and coating material composition of the invention allows to obtain coatings with good,characteristics in terms of hardness and abrasion resistance, with a thickness of around 30 µm.

The step of applying the coating may take place by spraying the material onto the surface, using known equipment such as airless spraying, with a linearly moving and possibly rotating spray gun mounted inside the pipe. A typical linear speed of the spray gun is 3 m/min. Some UV formulations could be sensitive to shear and moisture. For this reason, specific piston pumps (like bellows pumps developed by Graco) could be used. These pumps combine the gentle action of the bellow pump with a reduction of the exposure to the external environment.

Depending on the viscosity and the thickness to be applied, the liquid coating material can be heated at a moderate temperature (<80°C) before and during spraying, e.g. to a temperature between 40 and 60°C, in order to facilitate the application of the coating onto the surface. It is also feasible to pre-heat the internal surface of the pipe to a temperature of 40 to 60°C before applying the coating material. This temperature range may also be reached during or after the surface pre-treatments that are mentioned in this application. The heating is beneficial for obtaining low surface roughness of the coating (which is a property beneficial to improve the flow). Other spray technologies can be used, such as electrostatic spraying, in particular if the coating is not too thick, for example in the case of multi-layer systems (see below).

Besides spraying, the coating material may be applied by any other suitable technique, such as by using rolls or brushes, the latter two being suitable primarily for local application of the coating (e.g. on site).

After application of the UV curable coating mixture, the curing step is preferably performed by introducing one or more UV lamps inside the pipe with the help of a supporting structure, e.g. a rail. The UV lamp(s) are positioned at a suitable distance from the surface in order to allow an efficient curing. In order to not damage the surface, suitably no contact is allowed between the lamps or any element of the structure supporting the lamp(s), and the wet coating layer applied on the internal surface. The curing step according to the invention takes place by rotating the pipe about its central axis, while moving the lamps with respect to the pipe in the longitudinal direction of the pipe. According to an embodiment, the rotation and the longitudinal movement take place at a constant speed. The speed value may be chosen in accordance with the type of coating composition that is used, the size of the pipe, the size and number of the lamps. Alternatively, the lamps may be moving linearly along the central axis of the pipe, while rotating about said axis, with the pipe remaining stationary or with the pipe equally rotating about its central axis.

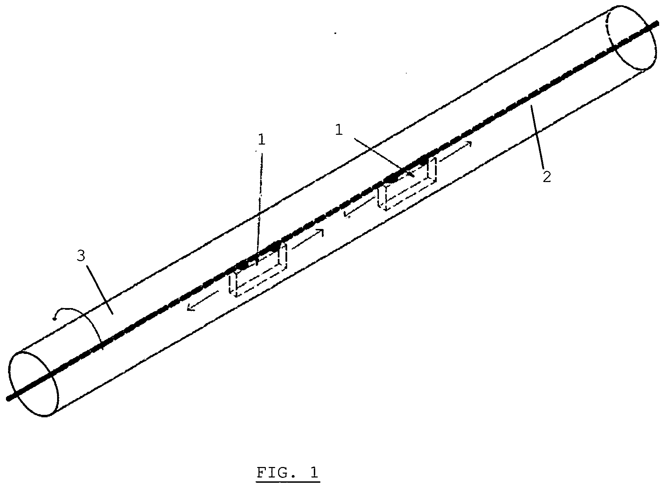

Figure 1 illustrates an example of curing installation suitable for applying the method of the invention to pipe with big enough internal diameters (ID) (e.g., ID > 50 cm). Two UV-lamps 1, are mounted on a rail 2, the rail being concentrically arranged with respect to the pipe 3 that has received a UV-curable coating layer on its inner surface. The UV lamps are made of one UV bulb (see below) and one reflector, both being enclosed in a housing. The reflector is present to focus the UV rays emitted from the bulb. As the bulb will generate some infrared radiation, some heat will be generated during operation. While some of this heat can be beneficial for developing the coating performance, excessive heat generation may lead to temperatures that may have a detrimental impact on the efficiency and lifetime of the bulb. Preferably, air is blown or water is circulated inside the lamp housing in order to maintain the internal temperature below reasonable levels (e.g. < 80°C).

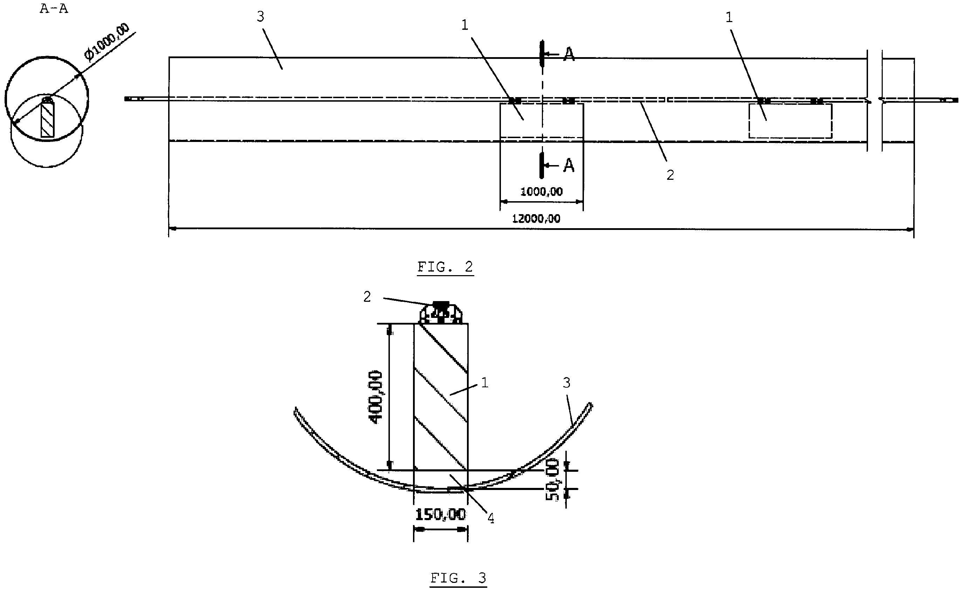

The lamps are arranged to be moveable along the longitudinal direction of the rail. The pipe is mounted so as to be rotatable about its central longitudinal axis, i.e. the axis that coincides with the rail. The lamp housings are shaped as rectangular enclosures with emitting surfaces 4 arranged at a suitable distance from the surface to be cured. Figures 2 and 3 are showing further views and a detail of the installation. The dimensions that are shown in the drawings are given purely by way of example. The length of the pipe is suitably 12 m, with an internal diameter of suitably 100 cm. The lamp enclosures are suitably 100 cm long, as measured in the longitudinal direction of the pipe, 15 cm wide in the direction perpendicular thereto, and 40 cm wide as measured in the radial direction. The distance between the emitting surface 4 of the lamps and the surface to be cured is thus suitably about 50 mm as measured in said radial direction. For smaller or bigger internal pipe diameters than 100 cm, the dimension of the lamp housings may need to be adjusted. In order to process pipes with bigger internal diameters (e.g. ID > 130 cm), the lamp housing can for example be placed onto height adjustable pedestals fixed on the rail so as to maintain the needed distance between the emitting surface 4 and the surface to be cured.

When pipes with smaller internal diameters (e.g. ID < 50 cm) need to be processed, no space may be available for a reflector and a housing. In this case, the rail can be fitted with liquid cooled UV bulbs. These commercially available bulbs are made with a double walled quartz envelope in which a liquid (e.g. water) is circulated to maintain the temperature below a given threshold. Because some of the UV radiation will be absorbed by the quartz envelope, typically higher powered UV lamps will need to be used in this case to achieve an efficient curing.

Curing the coating composition applied on one pipe may take place by simultaneously rotating the pipe and moving the lamps in the longitudinal direction (e.g. rotation speed 3 m/min measured at the inner surface of the pipe combined with a suitable linear speed of the lamps). Possibly the lamps are maintained at a given position, while the pipe rotates once, thereby curing a portion of the surface corresponding to the length of the lamps. After that the lamps are moved to a next portion and the process is repeated (i.e. stepwise curing).

Once the whole internal surface of one pipe is cured, it may be preferred during pipe coating, to turn off the UV lamps before removing the latter from the pipe and start curing the internal surface of another pipe. This will reduce the consumption in electrical energy required to power the lamps and avoid the exposure for the operator to ultraviolet radiation. With conventional systems, shutting each time the UV lamps on and off the lamp would however negatively impact the bulb's lifetime. This operation mode would also impact the pipe coating line throughput due to the needed time to reach full UV irradiance after the lamp has been completely shut off. This time is called the "hot restart time" and is typically of the order of 2 to 10 minutes. For pipes with big enough internal diameters, the preferred solution will be to use a shutter system that can be mechanically "open" during operation and "closed" during idle processing times. When the shutter system is closed, the power level of the lamps is reduced to e.g. 1/3rd of the full power. Beyond avoiding any ultraviolet exposure for the operator, the electrical energy consumption can thus be reduced without impacting the lifetime of the bulb. For the pipes with smaller internal diameters, no space will be generally available for a shutter system. A preferred solution will be to shut off and on commercially available UV lamp systems requiring shorter hot restart times, such as the quick start ultraviolet emission unit described in US 5,298,837. These quick start systems, commercially available e.g. from Kühnast Strahlungs Technik, utilize single walled or double walled arc based bulbs, and incorporates such bulbs in an electronic circuit, such that hot restart times of 1-2 seconds can be achieved.

Any suitable UV bulb known in the art may be used in the method of the invention. In terms of wavelengths, the ultraviolet range is from 200 nm to 450 nm. UVC (from 200 to 280 nm) consists of short waves, good for surface curing, thereby enhancing the resistance to scratching and chemical contamination. UVB (from 280 to 320 nm) consists of medium waves and contributes to bulk curing. UVA (from 300 to 390 nm) consists of long waves and goes deep in the coating, even when the coating is pigmented. UVV (from 390 to 450 nm) consists of ultra-long waves and goes deeper in the coating, even when the coating is thick and pigmented in white.

Although either arc or microwave based bulbs can be used, arc based bulbs will be preferred because of their lower cost and typically smaller spatial footprint. The latter feature is especially beneficial when pipes with smaller internal diameters need to be processed. An arc based bulb is a quartz tube, filled with an inert gas (argon or xenon) and other fill materials and two electrodes, one at each end, which are connected to an appropriate power source that can be located outside the pipe. The most common bulb spectrum is the mercury spectrum, also known as the "H" spectrum. This is produced by using only mercury as the fill material of the bulb. At room temperature, the mercury is in the liquid state. When an arc is applied to the electrodes, the enclosed inert gas is ionized and the bulb temperature rises causing evaporation of the mercury. Further electrical discharge through the mercury vapour produces a mercury plasma that discharges electromagnetic radiation. It is possible to use UV bulbs doped with additives, for example iron (D bulb) or gallium (V bulb). The bulb D has a strong output in the 350-400 nm range and the V bulb a very efficient output in the 400-450 nm range.

No single bulb produces the entire UV range efficiently. The main reason for selecting a specific bulb is its ability to generate the right wavelengths necessary to activate the photopolymerization initiator even in the case of thick coatings and the presence of pigments absorbing UV light.

The most commonly used spectra are the following :
* Mercury ("H) UV bulb Lamp spectrum: This is the general purpose UV curing lamp with strong output in the UVC (200-280 nm) and the UVB (280-320 nm). It is typically used for curing litho inks and overvarnishes.
* Iron ("D") UV bulb spectrum: With a much higher percentage of its output in the UVA (320-400 nm), this lamp is used where deeper penetration is required. Applications include thick pigmented coatings and very thick clear coats.
* Gallium ("V") UV bulb spectrum: Strong output in the violet region of the visible spectrum (400-420 nm) makes this lamp well suited to curing of white pigmented coatings.

The curing may take place in one step (one exposure to a single UV lamp), or in several steps (several subsequent exposures to the same or another type of UV lamp). For example, a coating formulation containing a pigment may require a first curing step with a D-lamp (high UVA, hence good penetration in the layer), followed by a second step with an H-lamp (surface curing to ensure good quality of the coating surface in terms of hardness and abrasion resistance).

The method may be applied on the steel inner surface of an uncoated pipe, but it may also be applied on a previously coated pipe. For example, pipes that have received an epoxy solvent-based or solvent free coating may be provided with an additional UV-cured coating according to the invention, in order to improve certain characteristics, for example the hardness or smoothness of the surface.

The pipes may be subjected to a pre-treatment (cleaning and/or conversion treatment) before the application of the coating. This can be a cleaning according to known methods, for example a degreasing with solvents or alkaline solution followed by rinsing with water and drying with compressed air. Possibly this cleaning cycle can be followed by a pre-heating treatment at a temperature of for example 40°C.

Instead of, before or after the above cleaning and possibly the heating pre-treatment, a sand blast pre-treatment may be applied according to known standards (e.g. ISO 8501-1:2007). Possibly this blast cleaning can be performed after pre-heating the surface at a temperature of for example 50 °C.

According to a specific embodiment of the method of the invention, the coating is applied in several sequences of applying (preferably spraying) a layer of UV-curable liquid coating material and UV curing said material, each layer (except the first) being applied on the previously applied coating. According to an embodiment, a first layer of a first liquid coating material composition is applied to the interior pipe surface and cured, followed by one or more further spraying/curing sequences, said first coating material composition comprising at least the following components, or consisting of the following components, or consisting of the following components and a remainder being water and/or one or more other solvents :
- one or more adhesion/corrosion oligomers (e.g. epoxy based acrylates),
- one or more monomers that have a diluting effect and/or an adhesion enhancing effect (e.g. DPGDA),
- one or more adhesion promoters (e.g. Ebecryl® 168),
- one or more photopolymerization initiators, (e.g. Darocur® 1173).

According to an embodiment, the first spraying/curing sequence is followed by one additional spraying/curing sequence, the second coating material composition of the second layer comprising at least the following components, or consisting of the following components, or consisting of the following components and a remainder being water and/or one or more other solvents :
- one or more hardness/abrasion oligomers (e.g. CN® 2634 or CN® 9761 A75),
- one or more monomers that have a diluting and/or a hardness enhancing effect (e.g. Sr® 833S),
- one or more photopolymerization initiators (e.g. Darocur®1173).

Additional components that may be added to the first coating material composition are one or more of the following :
- one or more corrosion inhibitors,
- one or more extenders,
- more pigments,
- one or more wetting agents.

Additional components that may be added to the second coating composition are :
- one or more dispersions of colloidal particles in (meth)acrylate monomer, e.g. Nanocryl,
- one or more levelling agents.

The multi-step method allows to optimize the coating characteristics, by choosing the components for each layer. For example, the adhesion promoters are only applied in the first layer, while the hardness enhancing components are only applied in the second layer. In the two-step method, the individual layers may be thinner than the thickness of the layer in the one-step method. The first layer and the second layer may be between 10 µm and 60 µm, more preferably between 20 and 40 µm. The application of thinner layers is beneficial for having a better and faster curing. Instead of using 2 different lamps (for example H and D) to cure the coating, only one can be used for each layer.

The first layer may be pigmented (e.g. in red) and contain the necessary corrosion inhibitors. By using the right photopolymerization initiator (also referred to as photoinitiator) for the pigmented composition and a D or V lamp (strong UV A output), the adhesion pigmented layer (primer) will be well through-cured. The second layer may then contain the ingredients needed for boosting the chemical, scratch and abrasion resistance. The second layer may be easily cured by using for example a conventional mercury lamp (H lamp).

The invention is related to a pipe provided with a UV-cured coating, obtainable by the method of the invention. According to the preferred embodiment, this pipe is characterized by its coating composition, comprising at least the following components, or consisting of the following components, or consisting of the following components and unavoidable impurities :
*one or more oligomers, being photocurable (meth)acrylate resins. These oligomers may be functionalized oligomers, possibly selected from the group consisting of epoxy acrylates, urethane acrylates and polyester acrylates
*one or more (meth)acrylate monomers. These monomers may be selected from the group consisting of a monofunctional (meth)acrylate monomer and a difunctional (meth)acrylate monomer,
*one or more adhesion promoters. According to an embodiment, suitable adhesion promoters are selected from the group consisting of organosilanes, thiol-based compounds, organotitanates, organozirconates, zircoaluminates and (meth)acrylates, said (meth)acrylates having a phosphate group,
*one or more photopolymerization initiators.

Possibly, the coating further comprises at least one of the following components :
*abrasion-resistant particles, originating from the dispersion of colloidal particles contained in the coating material,
*one or more corrosion inhibitors,
*one or more extenders,
* more colour pigments,
*one or more wettability and/or levelling agents.

The coating material composition as described above may comprise :
*between 10 and 60 mass% of said one or more photocurable (meth)acrylate resins,
*between 5 and 70 mass% of said one or more (meth)acrylate monomers,
*between 1 and 10 mass% of said one or more adhesion promoters,
*between 1 and 10 mass% of said one or more photopolymerization initiators.

According to preferred embodiments, the coating comprises a polyester resin or a urethane resin having hardness and abrasion-enhancing properties. In particular, said coating may comprise at least 35 mass% of a hardness and abrasion-enhancing urethane resin or at least 35 mass% of a hardness and abrasion-enhancing polyester resin.

The coating may have a multi-layered structure, for instance a two-layered structure, with a bottom layer and a top layer. According to an embodiment, the bottom layer comprises at least the following components, or consists of the following components, or consists of the following components and unavoidable impurities:
*one or more oligomers that have an adhesion enhancing and/or corrosion resisting effect,
*one or more monomers that have a diluting effect and/or an adhesion enhancing effect,
*one or more adhesion promoters,
*one or more photoinitiators
and the top layer comprising at least one of the following components, or consisting of the following components, or consisting of the following components and unavoidable impurities :
*one or more oligomers that have a hardness and/or abrasion enhancing effect,
*one or more monomers that have a diluting and/or a hardness enhancing effect,
*one or more photoinitiators.

According to an embodiment, the bottom layer further comprises at least one of the following components :
*one or more corrosion inhibitors,
*one or more extenders,
*one or more wetting agents.

The top layer may further comprise one or more of the following components :
*abrasion-resistant particles,
*one or more levelling agents.

The thickness of the UV-cured coating on a pipe according to the invention may be between 20 µm and 120 µm, more preferably between 25 µm and 80 µm or, even more preferably between 30 µm and 60 µm.

### Example 1

Table 1 is an example of a liquid coating formulation according to the invention.

**Table 1**

| Component type | Component | Content (mass%) |
|---|---|---|
| Oligomer | Ebecryl® 3300(epoxy) | 31.6 |
| Monomer | TPGDA (diluting) | 32.6 |
| | Ebecryl® 110 (adhesion/flexibility enhancing) | 10.9 |
| Adhesion promoter | Ebecryl® 168 | 3 |
| Photo-initiator | Additol® TPO (through cure) | 2 |
| | Additol® HDMAP (surface cure) | 1 |
| Extender | Mistron® Monomix G | 14.9 |
| Corrosion Inhibitor | Heucophos® ZCP | 3.6 |
| | Heucorin® RZ | 0.4 |

This formulation was applied on a number of steel test panels. The panels were subjected to one of the pre-treatments described above. The coating material was sprayed onto the samples at pressures ranging from 0.5 to 0.7 bar.

The samples were cured using UV radiation. Parameters for the lamps : two Hg lamps working at 100%, 240 W/cm each, at the optimal focal distance of 5.2 cm. The speed of the conveyor was 10 m/min. The thickness of the applied coating ranged between 20 µm and 100 µm.

The following parameters were measured :
- roughness, measured in terms of mean roughness depth, Rz
- adhesion, measured according to ISO 2409
- corrosion resistance, measured by salt spray testing, in accordance with API 5L2, appendix B)
- hardness, measured by the Buchholz test (ISO 2815)
- abrasion resistance, measured following the standard ASTM D968, method A. Additional quick and comparative tests have been developed and carried out by sand blasting at low pressure for few seconds.
- bending test, according to ASTM D 522: Method A. Conical mandrel
- resistance to chemicals (methanol), measured according to API 5L2.

All the samples showed a smooth surface appearance without defects visible upon visual inspection. The Rz value was lower than 3 µm for most of the samples except for samples with very low coating thickness (up to 20 µm). For sand-blasted panels, the thickness must be higher (preferably higher than 40 µm) in order to reach Rz < 3µm. Adhesion properties were good for all samples. The highest adhesion was reached for sand-blasted panels. The abrasion coefficient ranged between 15 and 27, with higher abrasion resistance for higher layer thickness. The hardness results showed Buchholz values between 83 and 250. The resistance to methanol was good for all samples.

The corrosion resistance was better for thicker coating thickness and for the sand-blasted samples, due to the better adhesion. The bending test was passed successfully by all samples, proving that the UV-coating has sufficient flexibility.

These tests therefore prove that a UV-cured coating according to the invention is capable of meeting criteria required for use on the interior surface of pipes for pipelines, in particular in terms of the roughness, hardness and corrosion resistance. The abrasion resistance could be however still improved.

### Example 2

Tables 2 and 3 summarize further results of a number of test samples S1 to S7 of the coating (not tested on a pipe, but on flat metal samples). Table 2 shows the coating formulation applied to the samples (all values in mass%). Table 3 shows the results in terms of the abrasion resistance, the hardness and the flexibility of the coating after UV curing (values between 0 and 5, based on results of bending test). Samples S1 to S6 were subjected to a single coating/curing step. Sample 7 was subjected to a double coating/curing step.

**Table 2**

| Component type | Component | S1 | S2 | S3 | S4 | S5 | S6 | S7/1 | S7/2 |
|---|---|---|---|---|---|---|---|---|---|
| Oligomer | CN®UVE 151 MM70 (Epoxy) | | 27 | 27 | | | 27 | 55 | |
| | CN®2609 (polyester hardness enhancing) | 40 | | | 20 | 20 | | | |
| | CN®2634 (Polyester-hardness enhancing) | | 28 | 14 | 40 | | | | 55 |
| | CN®9761A75 (urethane hardness enhancing) | | | | | 40 | | | |
| Monomer | Sr®531 (CTFA) | 50 | 35 | 35 | 30 | 30 | 35 | 35 | |
| Adhesion promoter | Sir®9051 | 5 | 5 | 5 | 5 | 5 | 5 | 5 | |
| Photoinitiator | Darocur® 1173 | 5 | 5 | 5 | 5 | 5 | 5 | 5 | 5 |
| Abrasion Additive | Nanocryl® C130 | | | 14 | | | 28 | | 40 |

**Table 3**

| | S1 | S2 | S3 | S4 | S5 | S6 | S7 |
|---|---|---|---|---|---|---|---|
| Thickness (µm) | 30 | 30 | 30 | 30 | 30 | 30 | 30 (20+10) |
| Abrasion resistance, weight loss in sand blast test at 1 bar and 10s (mg) / abrasion coefficient, sand fall test | 19.2 / 53 | 1.5 / 77 | 1.6 / nm | 4.7 / nm | 6.7 / nm | 1.8 / 67 | nm / 63 |
| Hardness (Buchholz coefficient) | 69 | 60 | 73 | 112 | 118 | 130 | 77 |
| Flexibility *(Mandrel value) | 4 | 5 | 4 | 2 | 3 | 4 | 4 |

| | | | | | | | |
|---|---|---|---|---|---|---|---|
| (nm = 'not measured') *: loss of adhesion after visual inspection scaled on a 0 to 5 scale, with 5 being the least loss (most flexible product). | | | | | | | |

It can be seen that the abrasion resistance for all of these samples is better than for the composition of the example of table 1. It is clear therefore that a particular choice of oligomer, having abrasion enhancing properties, possibly in combination with a dispersion of colloidal particles, improves the abrasion resistance in a significant way. In terms of the coating hardness, it can be seen that it is either the use of hardness-enhancing polyester resins or hardness-enhancing urethane resins at a level of at least 35 mass% that is responsible for an increase in the hardness, whilst maintaining a good abrasion resistance. Alternatively, instead of adding hardness-enhancing oligomers, going from 14 mass% of Nanocryl®C130 to 28 mass% clearly results in an increase of the hardness. The latter combination (sample 6) is better than the former (samples 4 and 5), in terms of ensuring optimal flexibility of the coating.

### Example 3

To show the effect on abrasion resistance performance and hardness behaviour the following formulations were prepared, as indicated in Table 4, showing the formulations vertically and the component types and amounts contained in the formulations (in wt%) horizontally.

**Table 4**

| | | 3-1, %w t | 3-2, %w t | 3-3, %w t | 3-4, %w t | 3-5, %w t |
|---|---|---|---|---|---|---|
| Oligomer, polyester acrylate | Sartomer CN® 2634 | | 20 | | | |
| Oligomer, polyester acrylate | Sartomer CN® 2609 | | | | | 20 |
| Oligomer, urethane acrylate | Sartomer CN® 9012 | 40 | 20 | | 20 | |
| Oligomer, epoxy acrylate | Sartomer CN® UVE151MM70 | | | 20 | | |
| Monomer, DCPDA | Sartomer SR® 833S | 20 | 20 | | | |
| Monomer, DPGDA | | 20 | 20 | 20 | 20 | 20 |
| Adhesion promoter | Ebecryl® 168 | 3 | 3 | 3 | 3 | 3 |
| Photoinitiator 1 | Esacure® 1001 M | 3 | 3 | 3 | 3 | 3 |
| Photoinitiator 2 | Darocur® 1173 | 3 | 3 | 3 | 3 | 3 |
| Corrosion inhibitor 1 | Heucophos® ZAM | 9 | 9 | | | |
| Corrosion inhibitor 2 | Novinox® PAS | | | | 9 | |
| Abrasion additive | Nanocryl® C165 | | | 40 | 40 | 40 |
| Talc | Mistron® Monomix G | | | 9 | | 9 |
| Red pigment | Bayferrox® 130M | 2 | 2 | 2 | 2 | 2 |

From the formulations test panels were prepared as described in Example 1. The thickness of the coatings was in all samples about 30 µm. The hardness was tested by nanoindentation, i.e. by pressing a hard tip onto the sample. The load placed on the tip is increased as the tip penetrates further into the sample and as soon as it reaches a predetermined value, the load is removed. The area of the residual indentation in the sample is measured and the hardness, H, is defined as the maximum load, divided by the residual indentation area. H is expressed in Pascal.

The abrasion resistance was determined in the same way as done for the samples in Example 1, on sand-blasted panels. The test was carried out after thermal ageing at 210 °C during 3 minutes in order to simulate the curing of external coatings that could takes place industrially. Recorded are the thicknesses of the coatings that have been removed, i.e. the lower the result, the better the performance is.

The panels had good to excellent corrosion resistance and resistance to chemicals (in particular to methanol). The performance results as to hardness and abrasion resistance are shown in Table 5.

Although all panels have a satisfactory flexibility performance, the test panels of 3-3 and 3-4 were also subjected to a conical mandrel test after thermal ageing at 210 °C for 3 minutes. That enabled a better assessment of the formulations by giving a value between 0 and 5, wherein 0 means no cracks and 5 a high level of cracks.

**Table 5**

| | Hardness, GPa | Abrasion resistance, µm | Flexibility |
|---|---|---|---|
| Sample 3-1 | 0.179 | 0.1 | |
| Sample 3-2 | 0.138 | 2.0 | |
| Sample 3-3 | 0.197 | 0.4 | 2 |
| Sample 3-4 | 0.162 | 0.4 | 5 |
| Sample 3-5 | 0.034 | nm | |

From the results it is apparent that polyester (meth)acrylates oligomers are satisfactory, but perform not as well as oligomers of epoxy (meth)acrylates and urethane (meth)acrylates. The latter two give excellent hardness and abrasion resistance, wherein the compositions containing oligomers of epoxy (meth)acrylates show a somewhat better flexibility than the compositions that contain an oligomer of a urethane (meth)acrylate. Therefore, compositions comprising epoxy (meth)acrylate oligomers are preferred.

## Claims

1. A method for producing a coating on the interior surface of a pipe for a pipeline installation, comprising the following sequence of steps :
* applying a layer of a liquid UV-curable coating composition onto said surface,
* curing said layer by irradiating said layer with UV light,
wherein said composition comprises :
* one or more oligomers, being photocurable (meth)acrylate resins,
* one or more (meth)acrylate monomers,
* one or more adhesion promoters,
* one or more photopolymerization initiators, and
* iron oxide red pigment,
wherein said curing step is performed by subjecting one or more UV-lamps configured to irradiate said interior surface to a continuous or stepwise movement, the movement of said lamp(s) with respect to said pipe taking place in the longitudinal direction of said pipe, while rotating the pipe about its central axis and/or while rotating the lamps about said central axis.

2. Method according to claim 1, wherein
* said one or more oligomers are functionalized oligomers;
* said one or more monomers are selected from the group consisting of a monofunctional (meth)acrylate monomer and a difunctional (meth)acrylate monomer; and/or
* said one or more adhesion promoters are selected from the group consisting of organosilanes, thiol-based compounds, organotitanates, organozirconates, zircoaluminates and (meth)acrylates, said (meth)acrylates having a phosphate group.

3. Method according to claim 1 or 2, wherein said one or more oligomers are selected from the group consisting of epoxy acrylates, urethane acrylates and polyester acrylates

4. Method according to any one of claims 1 to 3, wherein said coating composition further comprises at least one of the following components :
* one or more dispersions of colloidal particles in a (meth)acrylate monomer,
* one or more corrosion inhibitors,
* one or more extenders,
* more colour pigments,
* one or more wettability and/or levelling agents.

5. Method according to claim 4, wherein said coating composition comprises at least 10 mass% of colloidal particles dispersed in (meth)acrylate monomer.

6. Method according to any one of claims 1 to 5, wherein said coating composition comprises
* between 10 and 60 mass% of said one or more photocurable (meth)acrylate resins,
* between 5 and 70 mass% of said one or more (meth)acrylate monomers,
* between 1 and 10 mass% of said one or more adhesion promoters, and
* between 1 and 10 mass% of said one or more photopolymerization initiators.

7. Method according to any one of claims 1 to 6, further comprising additional sequences of applying and curing a layer of a liquid UV curable coating material onto said surface.

8. Method according to any one of claims 1 to 7, wherein a UV lamp is used, made of a UV bulb and a reflector, both enclosed in a housing.

9. Method according to claim 8, wherein the UV-bulb is an arc-based bulb.

10. Method according to claim 8 or 9, wherein air is blown or water is circulated inside the housing.

11. Method according to any one of claims 8 to 10, wherein the UV-lamp further comprises a shutter system that is open during operation and closed during idle processing time.

12. Method according to claim 11, wherein the power level of the UV bulb is reduced when the shutter system is closed.

13. Method according to any one of claims 8 to 12, wherein a quick start system is used, utilizing single walled or double walled arc based bulbs.

14. A pipe for a pipeline installation, which pipe comprises a liquid UV- curable coating composition on the interior surface of said pipe, said liquid coating composition comprising at least the following components :
* one or more oligomers, being photocurable (meth)acrylate resins,
* one or more (meth)acrylate monomers,
* one or more adhesion promoters,
* one or more photopolymerization initiators; and
* iron oxide red pigment.

15. Pipe according to claim 14, wherein said coating composition comprises
* said one or more oligomers are functionalized oligomers;
* said one or more monomers are selected from the group consisting of a monofunctional (meth)acrylate monomer and a difunctional (meth)acrylate monomer,
* said one or more adhesion promoters are selected from the group consisting of organosilanes, thiol-based compounds, organotitanates, organozirconates, zircoaluminates and (meth)acrylates, said (meth)acrylates having a phosphate group.

16. Pipe according to claim 14 or 15, wherein said one or more oligomers are selected from the group consisting of epoxy acrylates, urethane acrylates and polyester acrylates;

17. Pipe according to any one of claims 14 to 16, wherein said coating composition further comprises at least one of the following components :
* abrasion-resistant particles,
* one or more corrosion inhibitors,
* one or more extenders,
* more colour pigments,
* one or more wettability and/or levelling agents.

18. Pipe according to any one of claims 14 to 17, wherein said coating comprises
* between 10 and 60 mass% of said one or more photocurable (meth)acrylate resins,
* between 5 and 70 mass% of said one or more (meth)acrylate monomers,
* between 1 and 10 mass% of said one or more adhesion promoters,
* between 1 and 10 mass% of said one or more photopolymerization initiators.

19. Liquid UV-curable coating composition for use on the interior surface of a pipe for pipelines comprising:
* one or more oligomers, being photocurable (meth)acrylate resins,
* one or more (meth)acrylate monomers,
* one or more adhesion promoters,
* one or more photopolymerization initiators, and
* iron oxide red pigment.

## Patentansprüche

1. Verfahren zur Erzeugung einer Beschichtung auf der Innenoberfläche eines Rohres für eine Rohrleitungsinstallation, umfassend die folgende Reihenfolge von Schritten:
* Aufbringen einer Schicht aus einer flüssigen UV-härtbaren Beschichtungszusammensetzung auf die Oberfläche,
* Härten der Schicht durch Bestrahlen der Schicht mit UV-Licht,
wobei die Zusammensetzung umfasst:
* ein oder mehrere Oligomere, bei denen es sich um photohärtbare (Meth)acrylatharze handelt,
* ein oder mehrere (Meth)acrylatmonomere,
* einen oder mehrere Haftungspromotoren,
* einen oder mehrere Photopolymerisationsinitiatoren, und
* Eisenoxid-Rotpigment,
wobei der Härtungsschritt durchgeführt wird durch Unterziehen einer oder mehrerer UV-Lampen, die so konfiguriert sind, dass sie die Innenoberfläche bestrahlen, einer kontinuierlichen oder schrittweisen Bewegung, wobei die Bewegung der Lampe(n) mit Bezug auf das Rohr in der Längsrichtung des Rohres stattfindet während das Rohr um seine Zentralachse rotiert wird und/oder während die Lampen um die Zentralachse rotiert werden.

2. Verfahren nach Anspruch 1, wobei
* das eine oder die mehreren Oligomeren funktionalisierte Oligomere sind;
* das eine oder die mehreren Monomeren aus der Gruppe gewählt werden, bestehend aus einem monofunktionellen (Meth)acrylatmonomer und einem difunktionellen (Meth)acrylatmonomer; und/oder
* der eine oder die mehreren Haftungspromotoren aus der Gruppe gewählt werden, bestehend aus Organosilanen, Verbindungen auf Thiolbasis, Organotitanaten, Organozirconaten, Zircoaluminaten und (Meth)acrylaten, wobei die (Meth)acrylate eine Phosphatgruppe aufweisen.

3. Verfahren nach Anspruch 1 oder 2, wobei das eine oder die mehreren Oligomeren aus der Gruppe gewählt werden, bestehend aus Epoxyacrylaten, Urethanacrylaten und Polyesteracrylaten.

4. Verfahren nach mindestens einem der Ansprüche 1 bis 3, wobei die Beschichtungszusammensetzung weiterhin mindestens eine der folgenden Komponenten umfasst:
* eine oder mehrere Dispersionen von kolloidalen Teilchen in einem (Meth)acrylatmonomer,
* einen oder mehrere Korrosionsinhibitoren,
* einen oder mehrere Extender,
* mehrere Farbpigmente,
* ein oder mehrere Benetzungs- und/oder Egalisierungsmittel.

5. Verfahren nach Anspruch 4, wobei die Beschichtungszusammensetzung mindestens 10 Masse-% kolloidaler Teilchen, dispergiert in (Meth)acrylatmonomer, umfasst.

6. Verfahren nach mindestens einem der Ansprüche 1 bis 5, wobei die Beschichtungszusammensetzung umfasst
* zwischen 10 und 60 Masse-% des einen oder der mehreren photohärtbaren (Meth)acrylatharze,
* zwischen 5 und 70 Masse-% des einen oder der mehreren (Meth)acrylatmonomeren,
* zwischen 1 und 10 Masse-% des einen oder der mehreren Haftungspromotoren, und
* zwischen 1 und 10 Masse-% des einen oder der mehreren Photopolymerisationsinitiatoren.

7. Verfahren nach mindestens einem der Ansprüche 1 bis 6, weiterhin umfassend zusätzliche Aufeinanderfolgen des Aufbringens und Härtens einer Schicht aus einem flüssigen UV-härtbaren Beschichtungsmaterial auf die Oberfläche.

8. Verfahren nach mindestens einem der Ansprüche 1 bis 7, wobei eine UV-Lampe verwendet wird, hergestellt aus einer UV-Birne und einem Reflektor, beides eingeschlossen in einem Gehäuse.

9. Verfahren nach Anspruch 8, wobei die UV-Birne eine Lichtbogen-basierte Birne ist.

10. Verfahren nach Anspruch 8 oder 9, wobei innerhalb des Gehäuses Luft geblasen oder Wasser zirkuliert wird.

11. Verfahren nach mindestens einem der Ansprüche 8 bis 10, wobei die UV-Lampe weiterhin ein Verschlusssystem umfasst, das während des Betriebs offen ist und während einer Leerlauf-Verarbeitungszeit geschlossen ist.

12. Verfahren nach Anspruch 11, wobei der Leistungspegel der UV-Birne reduziert wird, wenn das Verschlusssystem geschlossen ist.

13. Verfahren nach mindestens einem der Ansprüche 8 bis 12, wobei ein schnelles Startsystem verwendet wird, unter Anwendung von einwandigen oder doppelwandigen Lichtbogen-basierten Birnen.

14. Rohr für eine Rohrleitungsinstallation, welches Rohr eine flüssige UV-härtbare Beschichtungszusammensetzung auf der Innenoberfläche des Rohres umfasst, wobei die flüssige Beschichtungszusammensetzung mindestens die folgenden Komponenten umfasst:
* ein oder mehrere Oligomere, bei denen es sich um photohärtbare (Meth)acrylatharze handelt,
* ein oder mehrere (Meth)acrylatmonomere,
* einen oder mehrere Haftungspromotoren,
* einen oder mehrere Photopolymerisationsinitiatoren; und
* Eisenoxid-Rotpigment

15. Rohr nach Anspruch 14, wobei die Beschichtungszusammensetzung umfasst
* das eine oder die mehreren Oligomeren sind funktionalisierte Oligomere;
* das eine oder die mehreren Monomeren sind gewählt aus der Gruppe, bestehend aus einem monofunktionellen (Meth)acrylatmonomer und einem difunktionellen (Meth)acrylatmonomer,
* der eine oder die mehreren Haftungspromotoren sind gewählt aus der Gruppe, bestehend aus Organosilanen, Verbindungen auf Thiolbasis, Organotitanaten,
Organozirconaten, Zircoaluminaten und (Meth)acrylaten, wobei die (Meth)acrylate eine Phosphatgruppe aufweisen.

16. Rohr nach Anspruch 14 oder 15, wobei das eine oder die mehreren Oligomeren aus der Gruppe gewählt sind, bestehend aus Epoxyacrylaten, Urethanacrylaten und Polyesteracrylaten.

17. Rohr nach mindestens einem der Ansprüche 14 bis 16, wobei die Beschichtungszusammensetzung weiterhin mindestens eine der folgenden Komponente umfasst:
* abriebfeste Teilchen,
* einen oder mehrere Korrosionsinhibitoren,
* einen oder mehrere Extender,
* mehrere Farbpigmente,
* ein oder mehrere Benetzungs- und/oder Egalisierungsmittel.

18. Rohr nach mindestens einem der Ansprüche 14 bis 17, wobei die Beschichtung umfasst
* zwischen 10 und 60 Masse-% des einen oder der mehreren photohärtbaren (Meth)acrylatharze,
* zwischen 5 und 70 Masse-% des einen oder der mehreren (Meth)acrylatmonomeren,
* zwischen 1 und 10 Masse-% des einen oder der mehreren Haftungspromotoren, und
* zwischen 1 und 10 Masse-% des einen oder der mehreren
Photopolymerisationsinitiatoren.

19. Flüssige UV-härtbare Beschichtungszusammensetzung zur Verwendung auf der Innenoberfläche eines Rohres für Rohrleitungen, umfassend:
* ein oder mehrere Oligomere, bei denen es sich um photohärtbare (Meth)acrylatharze handelt,
* ein oder mehrere (Meth)acrylatmonomere,
* einen oder mehrere Haftungspromotoren,
* einen oder mehrere Photopolymerisationsinitiatoren; und
* Eisenoxid-Rotpigment

## Revendications

1. Procédé pour produire un revêtement sur la surface intérieure d'un tuyau pour l'installation d'un pipeline, comprenant la séquence d'étapes suivante :
* application d'une couche d'une composition de revêtement durcissable aux UV sur ladite surface,
* durcissement de ladite couche par irradiation de ladite couche avec une lumière UV,
dans lequel ladite composition comprend :
* un ou plusieurs oligomères, qui sont des résines de (méth)acrylate photodurcissables,
* un ou plusieurs monomères de (méth)acrylate,
* un ou plusieurs promoteurs d'adhérence,
* un ou plusieurs amorceurs de polymérisation, et
* un pigment rouge d'oxyde de fer,
dans lequel l'étape de durcissement est effectuée par soumission d'une ou plusieurs lampes UV, configurées pour irradier ladite surface intérieure, à un mouvement continu ou par étapes, le mouvement de ladite ou desdites lampes par rapport audit tuyau se produisant dans la direction longitudinale dudit tuyau, cependant que le tuyau tourne autour de son axe central et/ou cependant que les lampes tournent autour dudit axe central.

2. Procédé selon la revendication 1, dans lequel
* ledit ou lesdits un ou plusieurs oligomères sont des oligomères fonctionnalisés ;
* ledit ou lesdits un ou plusieurs monomères sont choisis dans le groupe constitué par un monomère de (méth)acrylate monofonctionnel et un monomère de (méth)acrylate difonctionnel ; et/ou
* ledit ou lesdits un ou plusieurs promoteurs d'adhérence sont choisis dans le groupe constitué par les silanes organiques, les composés à base de thiol, les titanates organiques, les zirconates organiques, les zirco-aluminates et les (méth)acrylates, lesdits (méth)acrylates ayant un groupe phosphate.

3. Procédé selon la revendication 1 ou 2, dans lequel ledit ou lesdits un ou plusieurs oligomères sont choisis dans le groupe constitué par les époxy-acrylates, les uréthane-acrylates et les polyester-acrylates.

4. Procédé selon l'une quelconque des revendications 1 à 3, dans lequel ladite composition de revêtement comprend en outre au moins l'un des composants suivants :
* une ou plusieurs dispersions de particules colloïdales dans un monomère de (méth)acrylate,
* un ou plusieurs inhibiteurs de corrosion,
* une ou plusieurs matières de charge,
* un ou plusieurs pigments colorés,
* un ou plusieurs agents mouillants et/ou nivelants.

5. Procédé selon la revendication 4, dans lequel ladite composition de revêtement comprend au moins 10 % en masse de particules colloïdales dispersées dans le monomère de (méth)acrylate.

6. Procédé selon l'une quelconque des revendications 1 à 5, dans lequel ladite composition de revêtement comprend
* entre 10 et 60 % en masse de ladite ou desdites une ou plusieurs résines de (méth)acrylate photodurcissables
* entre 5 et 70 % en masse dudit ou desdits un ou plusieurs monomères de (méth)acrylate,
* entre 1 et 10 % en masse dudit ou desdits un ou plusieurs promoteurs d'adhérence, et
* entre 1 et 10 % en masse dudit ou desdits un ou plusieurs amorceurs de photopolymérisation.

7. Procédé selon l'une quelconque des revendications 1 à 6, comprenant en outre des séquences additionnelles d'application et de durcissement d'une couche d'un matériau de revêtement durcissable aux UV liquide sur ladite surface.

8. Procédé selon l'une quelconque des revendications 1 à 7, dans lequel est utilisée une lampe UV faite d'une ampoule UV et d'un réflecteur, les deux enfermés dans un carter.

9. Procédé selon la revendication 8, dans lequel l'ampoule UV est une ampoule à arc.

10. Procédé selon la revendication 8 ou 9, dans lequel de l'air est insufflé ou de l'eau est mise à circuler à l'intérieur du carter.

11. Procédé selon l'une quelconque des revendications 8 à 10, dans lequel la lampe UV comprend en outre un système obturateur qui est ouvert durant le fonctionnement et fermé durant le temps d'inactivité.

12. Procédé selon la revendication 11, dans lequel le niveau de puissance de l'ampoule UV est réduit quand le système obturateur est fermé.

13. Procédé selon l'une quelconque des revendications 8 à 12, dans lequel est utilisé un système de démarrage rapide utilisant des ampoules à arc à paroi simple ou à paroi double.

14. Tuyau pour une installation de pipeline, lequel tuyau comprend une composition de revêtement durcissable aux UV liquide sur la surface intérieure dudit tuyau, ladite composition de revêtement liquide comprenant au moins les composants suivants :
* un ou plusieurs oligomères qui sont des résines de (méth)acrylate photodurcissables,
* un ou plusieurs monomères de (méth)acrylate,
* un ou plusieurs promoteurs d'adhérence,
* un ou plusieurs amorceurs de photopolymérisation, et
* un pigment rouge d'oxyde de fer.

15. Tuyau selon la revendication 14, dans lequel, dans ladite composition de revêtement
* ledit ou lesdits un ou plusieurs oligomères sont des oligomères fonctionnalisés ;
* ledit ou lesdits un ou plusieurs monomères sont choisis dans le groupe constitué par un monomère (méth)acrylate monofonctionnel et un monomère (méth)acrylate difonctionnel,
* ledit ou lesdits un ou plusieurs monomères d'adhérence sont choisis dans le groupe constitué par les silanes organiques, les composés à base de thiol, les titanates organiques, les zirconates organiques, les zirco-aluminates et les (méth)acrylates, lesdits (méth)acrylates ayant un groupe phosphate.

16. Tuyau selon la revendication 14 ou 15, dans lequel ledit ou lesdits un ou plusieurs oligomères sont choisis dans le groupe constitué par les époxy-acrylates, les uréthane-acrylates et les polyester-acrylates.

17. Tuyau selon l'une quelconque des revendications 14 à 16, dans lequel ladite composition de revêtement comprend en outre au moins l'un des composants suivants :
* des particules résistantes à l'abrasion,
* un ou plusieurs inhibiteurs de corrosion,
* une ou plusieurs matières de charge,
* un ou plusieurs pigments colorés,
* un ou plusieurs agents mouillants et/ou nivelants.

18. Tuyau selon l'une quelconque des revendications 14 à 17, dans lequel ledit revêtement comprend
* entre 10 et 60 % en masse de ladite ou desdites une ou plusieurs résines de (méth)acrylate photodurcissables
* entre 5 et 70 % en masse dudit ou desdits un ou plusieurs monomères de (méth)acrylate,
* entre 1 et 10 % en masse dudit ou desdits un ou plusieurs promoteurs d'adhérence, et
* entre 1 et 10 % en masse dudit ou desdits un ou plusieurs amorceurs de photopolymérisation.

19. Composition de revêtement durcissable aux UV liquide pour utilisation sur la surface intérieure d'un tuyau pour pipelines comprenant :
* un ou plusieurs oligomères qui sont des résines de (méth)acrylate photodurcissables,
* un ou plusieurs monomères de (méth)acrylate,
* un ou plusieurs promoteurs d'adhérence,
* un ou plusieurs amorceurs de photopolymérisation, et
* un pigment rouge d'oxyde de fer.
